# EUROPEAN PATENT APPLICATION

(11) **EP 4 729 227 A1**
(43) Date of publication of application: **22.04.2026**
(21) Application number: 25209311.7
(22) Date of filing: 17.10.2025
(51) Int. Cl.: B23K 26/08, B23K 26/351, B23K 26/38, B23K 26/402, B23K 26/70, H01M 4/04, H01M 4/13, H01M 4/139

(54) **LASER NOTCHING APPARATUS AND RECHARGEABLE BATTERY MANUFACTURING SYSTEM**

(30) Priority: 21.10.2024 KR 20240144223
(71) Applicant: SAMSUNG SDI CO., LTD., Yongin-si, Gyeonggi-do 17084 (KR)
(72) Inventor: JANG, Hanbyeol, 17084 Yongin-si (KR); OH, Eunseok, 17084 Yongin-si (KR); JEOUNG, Seokyo, 17084 Yongin-si (KR); YUN, Jaehyeon, 17084 Yongin-si (KR)
(74) Representative: Maiwald GmbH

(57) **Abstract**

A laser notching apparatus of the present disclosure includes a supporting member for supporting an electrode plate; and a laser irradiating member above the supporting member and which irradiates a laser to the electrode plate at a set angle to cut the electrode plate.

## Description

### BACKGROUND

### 1. Field

Aspects of embodiments of the present disclosure relate to a laser notching apparatus and a rechargeable battery manufacturing system.

### 2. Description of the Related Art

Rechargeable batteries are manufactured in various shapes, among which a pouch battery includes an electrode assembly with a separator as an insulator between a positive electrode plate and a negative electrode plate, and a thin flexible pouch in which the electrode assembly is built. The pouch generally accommodates the electrode assembly in the inner space thereof.

The electrode assembly of the rechargeable battery is largely divided into a winding type and a stacking type, depending on the structure. The stacking type may provide structural safety and spatial utility, so it may be applied to small-, medium-, and large-sized structures. The stacking type rechargeable battery may stack a plurality of electrodes and separators.

In the manufacturing process of such a rechargeable battery, a slurry is applied to a substrate. The slurry may be dried using a drying device to create an active material layer, and a notching process may be performed to cut the slurry and the substrate by using a notching apparatus.

The above information disclosed in this Background section is only for enhancement of understanding of the background of the present disclosure, and therefore, it may contain information that does not form prior art.

### SUMMARY

According to an aspect of the present disclosure are directed to a laser notching apparatus and a rechargeable battery manufacturing system capable of reducing uneven cutting of an electrode plate.

The aspects and features of the present disclosure are not limited to the above-mentioned aspects and features, and other aspects and features not mentioned would be clearly understood to those skilled in the art from the following description.

A laser notching apparatus according to an embodiment includes a supporting member for supporting an electrode plate; and a laser irradiating member above the supporting member, and inclined to irradiate a laser obliquely to the electrode plate at a set angle to cut the electrode plate.

The supporting member may be positioned parallel to the ground, and the laser irradiating member may be positioned at the set angle with respect to the ground.

A first driving member coupled to the laser irradiating member and configured to rotate the laser irradiating member from the set angle to a second angle different form the set angle.

The laser irradiating member may irradiate the laser so that it slopes downward from the outside to the inside of the electrode plate.

The supporting member may be positioned at an angle with respect to the ground, and the laser irradiating member may be positioned in a vertical direction with respect to the ground.

The laser notching apparatus may include a second driving member coupled to the supporting member and configured to rotate the supporting member to change the set angle from a first angle to a second angle.

The laser irradiating member may be configured to irradiate the laser so that it slopes downward from the outside to the inside of the electrode plate.

The set angle may be in a range from approximately 35 degrees to approximately 55 degrees.

According to an aspect, a rechargeable battery manufacturing system according to the present invention includes a transporting device for transporting a substrate; a coating device for applying a slurry to the substrate; a drying device for drying the slurry to generate dried slurry; and a laser notching apparatus for cutting the substrate and the dried slurry with a laser.

According to some embodiments, the laser notching apparatus irradiates the laser obliquely to the electrode plate so that the substrate, the first active material layer, and the second active material layer may be cut in parallel in the vertical direction to fit a target shape.

According to some embodiments, the incision surface of the electrode plate may be cut in a substantially uniform manner to help reduce the chance of a short circuit from occurring in the electrode assembly. In some embodiments, the manufacturing quality of the rechargeable battery may be improved.

### BRIEF DESCRIPTION OF THE DRAWINGS

The following drawings appended to this specification illustrate embodiments of the present disclosure and, together with the detailed description of the disclosure that follows, serve to further illustrate the technical ideas of the disclosure, and the disclosure is not to be construed as limited to what is illustrated in the accompanying drawings.
FIG. 1 is a cross-sectional view of an object cut by a current art laser notching apparatus.
FIG. 2 is a cross-sectional view of an electrode plate cut by a current art laser notching apparatus.
FIG. 3 is a perspective view of a rechargeable battery.
FIG. 4 is a cross-sectional view of a substrate and active material layer used to fabricate an electrode plate in an electrode assembly of the rechargeable battery of FIG. 3.
FIG. 5 is a side view of a rechargeable battery manufacturing system.
FIG. 6 is a side view of a laser notching apparatus according to an embodiment of the present disclosure.
FIG. 7 is a side view of a laser notching apparatus according to an embodiment of the present disclosure.
FIG. 8 is a side view of a laser notching apparatus according to an embodiment of the present disclosure.
FIG. 9 is a side view of a laser notching apparatus according to an embodiment of the present disclosure.
FIG. 10 is a cross-sectional view of an electrode plate cut by a laser notching apparatus according to one embodiment of the present disclosure.

### DETAILED DESCRIPTION

Hereinafter, an embodiment of the present disclosure is described with reference to the drawings. Terms and words used in the present specification and claims are not to be construed as being limited to the general or dictionary meanings, but are to be construed as having meanings and concepts that meet the technical ideas of the present disclosure based on a principle that the inventors can be their own lexicographer to appropriately define the concepts of terms in order to best describe their disclosures. Therefore, the configurations described in the exemplary embodiments and drawings of the present disclosure are merely some of the embodiments but do not represent all of the technical ideas, aspects, and features of the present disclosure. Thus, the present disclosure should be construed as including all changes, equivalents, and substitutions included in the scope of the present disclosure at the time of filing this application.

It should be further understood that the terms "comprise" and "include" and/or "comprising" and "including," when used in this specification, specify the presence of stated features, integers, steps, operations, elements, and/or components, but do not preclude the presence or addition of one or more other features, integers, steps, operations, elements, components, and/or groups thereof.

In addition, the accompanying drawings may be exaggerated in dimensions of some of the components rather than drawn to scale to facilitate understanding of the present disclosure. Additionally, like reference numbers may be assigned to like components in another embodiment.

The statement that two objects of a comparison are "the same" means that they are "substantially the same."

Therefore, "substantially identical" may include deviations that are considered in the art to be low-for example, deviations of no more than 5%. Additionally, the uniformity of a parameter in a given region may mean uniformity from an average perspective.

Although the terms "first," "second," and the like are used to describe various constituent elements, these constituent elements are not limited by these terms. These terms are only used to distinguish one component from another, and unless specifically stated to the contrary, a first component may also be a second component.

Throughout the specification, unless otherwise stated, each component may be singular or plural.

When any configuration is disposed "on top of" (or "under") a component or "above" (or "below") a component, it may mean that any configuration is disposed in contact with the top (or bottom) surface of the component, as well as that other configurations may be interposed between the component and any configuration disposed on (or below) the component.

Additionally, if a component is described as "on," "connected to," or "coupled to" another component, the components may be directly connected or connected to each other, but it should be understood that other components may be "interposed" between each component, or that each component may be "connected," "coupled," or "connected" through other components.

As used herein, the term "and/or" includes any one or all combinations of one or more related items. Additionally, the use of "may" when describing embodiments of the present disclosure refers to "one or more embodiments of the present disclosure."

Expressions such as "at least one" preceding a list of elements modify the entire list of elements and not an individual element in the list.

When reference is made to "A and/or B" throughout the specification, it means A, B or A and B, unless specifically stated to the contrary, and when reference is made to "C through D," it means C or higher and D or lower unless specifically stated to the contrary.

When a phrase such as "at least one selected from A, B, and C," "at least one selected from A, B, or C," "at least one selected from A, B, and C groups" and "at least one selected from A, B, and C" is used to specify a list of elements A, B, and C, the phrase may refer to any and all suitable combinations. For example, the expression "at least one of A, B, or C" indicates only A, only B, only C, both A and B, both A and C, both B and C, all of A, B, and C, or variations thereof.

The term "use" may be considered synonymous with the term "utilize."

As used herein, terms such as "substantially" and "about" are used as terms of approximation and not as terms of degree, and are intended to explain the inherent variations of measured or calculated values that would be recognized by a person of ordinary skill in the art.

It should be understood that, although the terms "first," "second," "third," etc., may be used herein to describe various elements, components, regions, layers, and/or sections, such elements, components, regions, layers, and/or sections should not be limited by these terms. These terms are only used to distinguish one element, component, region, layer or section from another element, component, region, layer, or section. Thus, a first element, component, region, layer, or section discussed herein could be termed a second element, component, region, layer, or section, without departing from the scope of the inventive concept.

As shown in the drawings, spatially relative terms, such as "beneath," "below," "lower," "under," "above," "upper," and the like, may be used herein for ease of explanation to describe the relationship of one element or feature to another element(s) or feature(s) as illustrated in the drawings. It should be understood that spatially relative positions are intended to encompass different orientations of the device in use or in operation, in addition to the orientations depicted in the drawings. For example, if the device in the drawings is turned over, elements described as "below," "beneath," or "under" other elements or features would then be oriented "above" the other elements or features. Thus, the term "down" can encompass both an orientation of above and below.

The terms used herein are intended to describe embodiments of the present disclosure and are not intended to limit it.

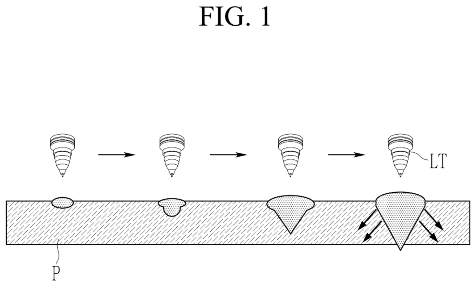

FIG. 1 is a cross-sectional view showing a process of cutting an object using a current art laser cutting device.

Referring to FIG. 1, when a laser is irradiated on a target object, the upper part of the target object is processed to have a wider internal width than the lower part.

Therefore, in the cutting process using the laser, an upper part of a base material P is heated by a laser irradiated from a laser unit LT to be liquefied and gasified, and the heat is gradually transferred to the lower part. Accordingly, the upper part of the base material P receives more heat than the lower part, and is generally processed more widely than the lower part due to the heat effect.

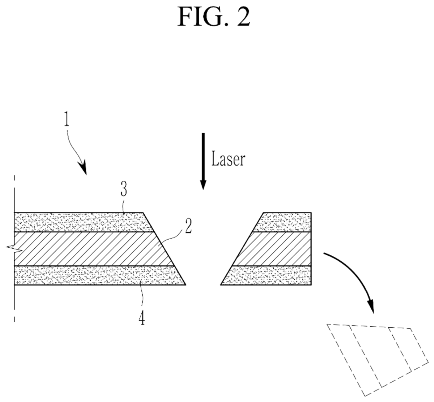

FIG. 2 is a cross-sectional view showing an electrode plate cut by a current art laser notching apparatus.

As explained above, in the laser cutting process, the upper part of the base material P (FIG. 1) is processed to be wider than the lower part. Accordingly, as shown in FIG. 2, when an electrode plate 1 including a substrate 2 and active material layers 3 and 4 is processed by a laser, the active material layer 3 positioned on the upper surface of the substrate 2 is processed more than the active material layer 3 positioned on the lower surface of the substrate 2, which is relatively less processed.

Accordingly, there may be a difference in the height of the cross-section of the upper and lower parts of the electrode plate, which may not only lower the manufacturing quality of the rechargeable battery, but may also cause a short circuit to occur in the electrode assembly.

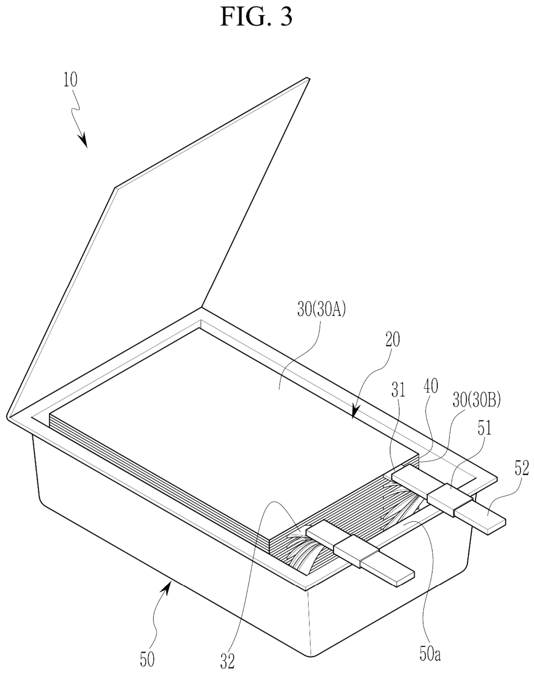

FIG. 3 is a perspective view of a rechargeable battery that may be manufactured by using a laser notching apparatus according to an embodiment of the present disclosure.

Referring to FIG. 3, a rechargeable battery 10 may include an electrode assembly 20 and a case 50.

The electrode assembly 20 includes a plurality of electrode plates 30A and 30B and a separator 40. In some embodiments, the plurality of electrode plates 30A and 30B may include a first electrode plate 30A and a second electrode plate 30B.

The electrode assembly 20 may be in the form of a wound or stacked structure including the first electrode plate 30A, the second electrode plate 30B, and the separator 40.

For example, the electrode assembly 20 may be a stacked type in which the electrode plates 30A and 30B are arranged to be stacked in multiple layers. In some embodiments, the electrode assembly 20 may be of a repeatedly wound jelly-roll type. In the present disclosure, an example of the electrode assembly 20 being of the stacked type is given.

In some embodiments, the manufacturing process of the electrode assembly 20 of the stacked type generally involves a primary stacking process and a secondary process.

In the primary stacking process, a double-sided cathode (full cathode) and a double-sided anode (full anode) may be stacked. In some embodiments, the double-sided cathode (full cathode) may be any of the plurality of first electrode plates 30A except the outermost first electrode plate 30A. In some embodiments, the double-sided anode (full anode) may be the second electrode plate 30B.

In the secondary stacking process, a cross-section cathode (half cathode) may be stacked on one or more of the outermost sides relative to a stacking direction. In some embodiments, the cross-section cathode may be the outermost first electrode plate 30A among the first electrode plates 30A.

For convenience, FIG. 1 illustrates the electrode assembly 20 in which the cross-section cathode is stacked on the upper outermost side of the electrode assembly 20, but it may also be possible for the cross-section cathode to be stacked on each of the upper outermost side and both outermost sides of the electrode assembly 20.

In some embodiments, the double-sided cathode and the double-sided anode have the active material layer applied to both sides of the substrate, and the cross-section cathode has the active material layer positioned on only one side of the substrate. Detailed descriptions of the double-sided cathodes, the double-sided anodes, and the cross-section cathodes are omitted.

The separator 40 may be interposed between the first electrode plate 30A and the second electrode plate 30B. The separator 40 may prevent or reduce a short circuit between the first electrode plate 30A and the second electrode plate 30B, and may enable the movement of lithium ions. In some embodiments, the separator 40 may be made of a relatively larger size than the first electrode plate 30A and the second electrode plate 30B.

A porous polymer film or a porous non-woven fabric of the separator 40 may be included. In some embodiments, the porous polymer film may be composed of a single layer or multiple layers including a polyolefin-based polymer such as an ethylene polymer, a propylene polymer, an ethylene/butene copolymer, an ethylene/hexene copolymer, and an ethylene/methacrylate copolymer. The porous non-woven fabric may include high-melting-point glass fibers and polyethylene terephthalate fibers. However, it is not limited thereto, and according to an embodiment, the separator may be a high-heat-resistance separator (ceramic coated separator (CCS)) including ceramic.

In some embodiments, the separator 40 may be cut into a unit length and placed between the first electrode plate 30A and the second electrode plate 30B, or a single separator 40 in a ribbon shape may be placed in a zigzag shape between the first electrode plate 30A and the second electrode plate 30B. In some embodiments, the separator 40 may be installed to be wound in one direction between the first electrode plate 30A and the second electrode plate 30B.

In this way, the arrangement form of the separator 40 is not limited to a specific form, but in the present embodiment, the separator 40 is described as being cut into unit lengths and arranged between the first electrode plate 30A and the second electrode plate 30B.

The case 50 may accommodate the electrode assembly 20. The electrode assembly 20 described above is accommodated in the case 50 together with an electrolyte.

In some embodiments, the electrolyte may be a non-aqueous electrolyte. The electrolytes may include a lithium salt and an organic solvent. The organic solvent may include one or more selected from a group consisting of propylene carbonate (PC), ethylene carbonate (EC), diethyl carbonate (DEC), dimethyl carbonate (DMC), ethyl methyl carbonate (EMC), methyl propyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, and tetrahydrofuran.

In some embodiments, the case 50 may be any one of a pouch type, a cylindrical type, and a square type. The case 50 of the pouch type may be manufactured by bending plate-shaped outer materials to face each other, pressing or drawing one surface, and including a recess on one surface.

The electrode assembly 20 is accommodated in a recess (not shown). A sealing part 50a is provided at the exterior circumference of the recess, and the sealing part 50a is sealed by a method such as heat coalescing while the electrode assembly 20 is accommodated in the recess.

In some embodiments, in the plurality of electrode plates, the first electrode plate 30A described above may be a negative electrode, and the second electrode plate 30B may be a positive electrode, but the opposite may also be formed. The first electrode plate 30A may include a first substrate tab 31 extending externally, and the second electrode plate 30B may include a second substrate tab 32 extending externally.

The first substrate tab 31 may be created by cutting a current collecting layer (not shown) of the first electrode plate 30A by using the laser notching apparatus, and the second substrate tab 32 may be created by cutting a current collecting layer (not shown) of the second electrode plate 30B by using the laser notching apparatus.

The first substrate tab 31 and the second substrate tab 32 may be electrically connected to the outside of the rechargeable battery 10 through a strip terminal 52. In some embodiments, an insulating tape 51 may be attached to the part of the strip terminal 52 that comes into contact with the case 50. The insulating tape 51 may prevent the strip terminal 52 and the case 50 from being conductive.

The rechargeable battery 10 that may be manufactured using the laser notching apparatus according to an embodiment is not necessarily limited to the structure as described above, but may include other structures as will be apparent to a person of skill in the art.

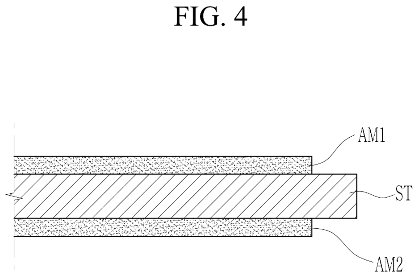

FIG. 4 is a cross-sectional view of a substrate and an active material layer used to manufacture an electrode plate included in an electrode assembly of the rechargeable battery of FIG. 3.

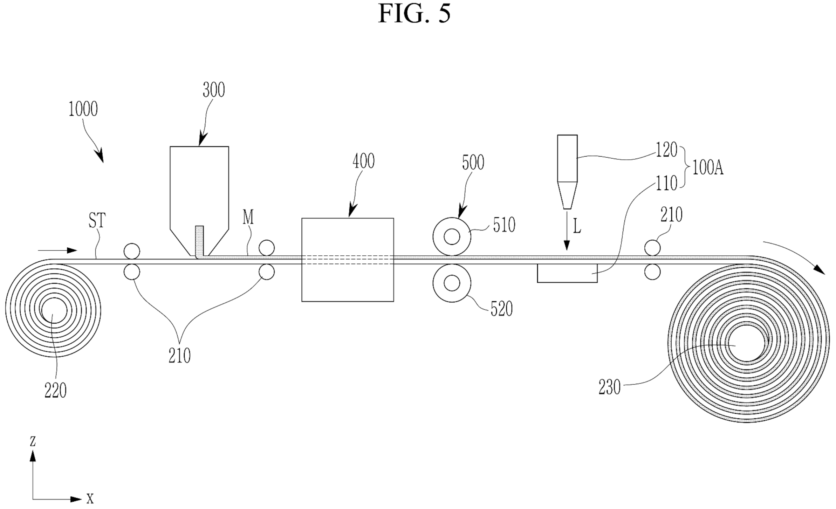

Referring to FIG. 4, in the manufacturing process of the electrode plate included in the electrode assembly, a first active material layer AM1 may be created by applying a slurry M (FIG. 5) to a substrate ST and drying it.

The substrate ST may be a current collector, and the current collector may include a known conductive material in a range that does not cause a chemical reaction within the rechargeable battery. For example, the current collector may include any one of stainless steel, nickel (Ni), aluminum (Al), titanium (Ti), copper (Cu), and alloys thereof, and may be provided in various forms such as a film, a sheet, or a foil.

Although not shown in the drawings, the substrate ST may include a current collecting region (not shown) and an uncoated region (not shown).

The current collecting region may have a first active material layer AM1 coated on at least one surface. The first active material layer AM1 may be applied to the remaining part except the edge region of the current collecting region. In some embodiments, the edge region of the current collecting region may be the uncoated region where the first active material layer AM1 is not applied.

In some embodiments, the first active material layer AM1 is positioned on at least a part of one surface of the substrate ST, and the end portion is formed in multiple stages. The edge of the first active material layer AM1 may be positioned apart from the edge of the substrate ST. A non-illustrated protective film may be attached to the boundary between the first active material layer AM1 and the substrate ST.

The method for positioning the first active material layer AM1 on the substrate ST may be, for example, a method that uses slit coater (e.g., a coating device 300 of FIG. 5), but is not limited thereto and various slurry (active material) coating methods may be used. The slurry discharged by the slit coater (e.g., the coating device 300 of FIG. 5) may be dried after being magnetized by a magnetizing device. A detailed description of the manufacturing process for such electrode plates will be provided later.

In some embodiments, the first active material layer AM1 may further include a binder (not shown) and a conductive material (not shown).

The binder (not shown) may mediate the bonding between the substrate ST and the active material, thereby improving mechanical stability. For example, the binder may be an organic binder or an aqueous binder, and may be used with a thickener such as carboxymethyl cellulose (CMC). More specifically, the organic binder may be any one of vinylidene fluoride-hexafluoropropylene copolymer (PVDF-co-HFP), polyvinylidene fluoride (PVDF), polyacrylonitrile (polyacrylonitrile), and polymethyl methacrylate (polymethyl methacrylate), and the aqueous binder may be styrene-butadiene rubber (SBR), but is not limited thereto.

A conductive material (not shown) may improve the electrical conductivity of the rechargeable battery. The conductive material may include a metal-based material. For example, the conductive material may include a current art carbon-based conductive material. More specifically, the conductive material may include any one of graphite, carbon black, graphene, and carbon nanotubes. Preferably, the conductive material may include carbon nanotubes, but is not limited thereto.

Below, a rechargeable battery manufacturing system capable of manufacturing the above electrode plate will be described in detail with reference to the accompanying drawings.

FIG. 5 is a side view of a rechargeable battery manufacturing system.

Referring to FIG. 5, a rechargeable battery manufacturing system 1000 includes a transporting device 210, a coating device 300, a drying device 400, a rolling device 500, and a laser notching apparatus 100A.

The transporting device 210 transports the substrate ST. The transporting device 210 transports the substrate ST in an x-axis direction.

The transporting device 210 may be, for example, a device that transports the substrate ST in a roll-to-roll manner. The substrate ST in a sheet shape may be unwound from an unwinder 220. In some embodiments, the substrate ST notched by the laser notching apparatus 100A may be wound on a rewinder 230.

The transporting device 210 may be a pair of rollers positioned to be in contact with the upper and lower surfaces of the substrate ST at specific positions along the transport direction of the substrate ST. In some embodiments, the metal foil that may be used as the substrate ST of the electrode plate of the rechargeable battery may be in contact with a plurality of rollers and transported in one direction. The position of the rollers for this purpose is not limited to a specific position and may vary depending on the design of the rechargeable battery manufacturing system 1000.

In some embodiments, the coating device 300 applies the slurry M to the substrate ST. The coating device 300 may be, for example, a slit coater. Although not specifically shown in the drawings, the slit coater may include a nozzle having one or more discharge holes.

The slit coater may apply the slurry to a certain thickness and area. The slit coater receives the slurry from a slurry storage unit (not shown). The slurry may be injected into the nozzle and applied (e.g., uniformly applied) to the substrate ST through the discharge port. A detailed description of the slit coater will be omitted.

The drying device 400 dries the slurry M. The drying device 400 may include, for example, one or more heaters. The heater may be installed spaced apart from the substrate ST. The heater converts electrical energy into heat energy to dry the slurry.

The drying device 400 may be placed behind the coating device 300 with respect to the transport direction of the substrate ST.

The slurry M applied to the substrate ST may be turned into an electrode mixture as the solvent inside is evaporated while passing through the drying device 400. The drying device 400 may be any device capable of evaporating solvent from the slurry to form the electrode mixture. For example, the drying device 400 may perform the drying by a heating type or a hot air type.

The rolling device 500 pressurizes the slurry M so that the thickness of slurry M becomes substantially uniform. That is, the rolling device 500 may roll the first dried active material layer (AM1, referring to FIG. 4) so that the electrode mixture has appropriate porosity and electrode density.

The rolling device 500 is not limited in terms of a device, a structure, etc., as long as it is in a form capable of rolling the electrode mixture.

For example, the rolling device 500 may include a pair of rolling rolls 510 and 520 arranged opposite each other with the substrate ST therebetween and configured so that mutual spacing is adjustable.

The laser notching apparatus 100A cuts the substrate ST and the dried slurry M using a laser. In the manufacturing process of the electrode plate of the current art electrode assembly, the uncoated region is cut to create substrate tabs 31, 32. (FIG. 3).

Methods for cutting the uncoated region may include a physical method using a cutting blade and a method using a laser.

The laser notching apparatus 100A according to the present disclosure may irradiate a laser onto the electrode plate to cut the electrode plate into a target shape. During the cutting process of the electrode plate, only the substrate ST may be cut, or the substrate ST and the dried slurry M may be cut together.

Below, a detailed description of the laser notching apparatus 100A according to an embodiment is described with reference to the drawings.

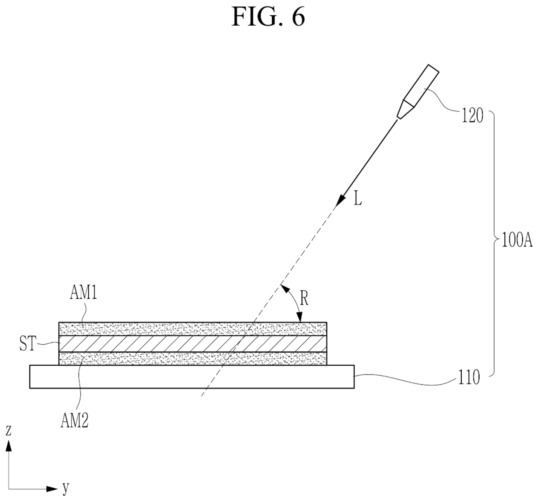

FIG. 6 is a side view of a laser notching apparatus according to an embodiment of the present disclosure.

Referring to FIG. 6, the laser notching apparatus 100A according to one embodiment of the present disclosure may include a supporting member 110 and a laser irradiating member 120.

The electrode plate may be positioned on the supporting member 110. In this regard, the supporting member 110 may support the electrode plate. In some embodiments, the electrode plate may include the substrate ST and the active material layers AM1 and AM2 as described above. However, the electrode plate is not necessarily limited to having the active material layers AM1 and AM2 on both sides of the substrate ST, and it may be possible for the active material layer AM1 to be present on only one surface of the substrate ST.

The electrode plate rolled by the aforementioned rolling device 500 (FIG. 5) may be transferred to the transporting device 210 (FIG. 5) and passed through the supporting member 110 in a spaced or closely contacted state with respect to the supporting member 110.

In some embodiments, the laser irradiating member 120 is positioned upward or above with respect to the supporting member 110, and irradiates the laser L obliquely at a set or predetermined angle R to the electrode plate to cut the electrode plate. In some embodiments,, the laser irradiating member 120 may irradiate the laser L so as to be inclined or sloped downward (e.g., tilted) from the outside to the inside of the electrode plate.

In some embodiments,, the set angle R may be in a range from approximately 35 degrees to approximately 55 degrees. If the predetermined angle R exceeds 55 degrees or is less than 35 degrees, it may be difficult to cut the electrode plate into the target shape. For example, if the predetermined angle R is 90 degrees as in the current art case, the first active material layer AM1 positioned on the upper surface of the substrate ST may be removed more than the second active material layer AM2. Conversely, if the predetermined angle R is small (e.g., less than 35 degrees), the lower part of the electrode plate and the second active material layer AM2 may be damaged (e.g., excessively damaged) by the laser L.

In some embodiments, in the laser notching apparatus 100A according to one embodiment of the present disclosure, the supporting member 110 may be positioned parallel to the ground (y-axis direction). In some embodiments,, the laser irradiating member 120 may be positioned at an angle with respect to the ground. Accordingly, the laser L irradiated from the laser irradiating member 120 may be irradiated to the electrode plate at a predetermined angle R.

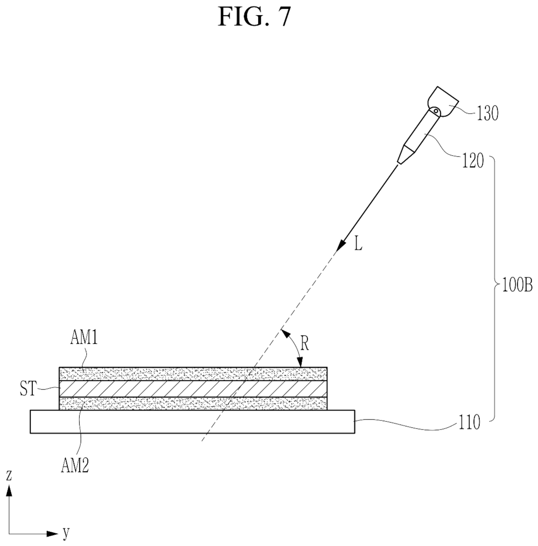

FIG. 7 is a side view of a laser notching apparatus 100A according to one embodiment of the present disclosure.

Referring to FIG. 7, a laser notching apparatus 100B according to one embodiment of the present disclosure may include a first driving member 130.

In some embodiments, the first driving member 130 rotates the laser irradiating member 120 to vary, set, or reset angle R. For example, the first driving member 130 may rotate the laser irradiating member 120 to change a set angle from a first angle to a second angle different from the first angle during the process of cutting the electrode plate. One side of the laser irradiating member 120 may be rotatably coupled to the first driving member 130.

For example, one end of the laser irradiating member 120 may be rotatably coupled to the first driving member 130. In some embodiments, although not shown in the drawings, the middle portion of the laser irradiating member 120 may be rotatably coupled to the first driving member 130.

The first driving member 130 may be, for example, a stepping motor. The stepping motor is a motor in which a stator and a rotor are meshed with gear-shaped protrusions (small teeth), so that a current flowing to the stator coil gradually rotates at an angle (e.g., a constant angle). The first driving member 130 may rotate the laser irradiating member 120 by selected angle. However, the first driving member 130 is not necessarily limited to being a stepping motor.

The laser notching apparatus 100B according to embodiment of FIG. 7 may reset the laser irradiating angle (e.g., during the process operation), depending on the cutting quality of the electrode plate.

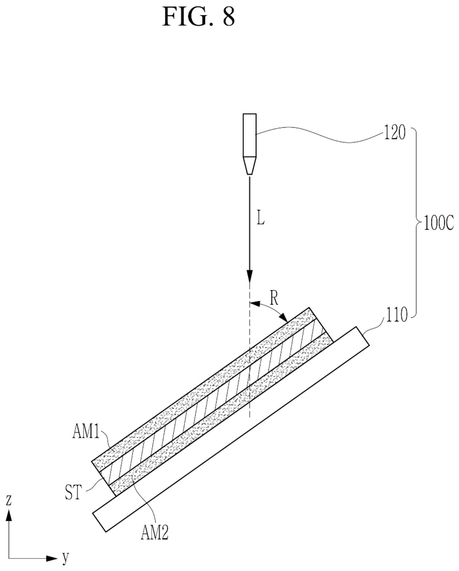

FIG. 8 is a side view of a laser notching apparatus 100C according to one embodiment of the present disclosure.

The supporting member 110 according to the embodiment of FIG. 8 may be positioned at an angle with respect to the ground. In some embodiments, the laser irradiating member 120 may be positioned in the vertical direction (z-axis direction) with respect to the ground. Accordingly, the laser irradiated from the laser irradiating member 120 may be irradiated to the electrode plate at a set or predetermined angle R.

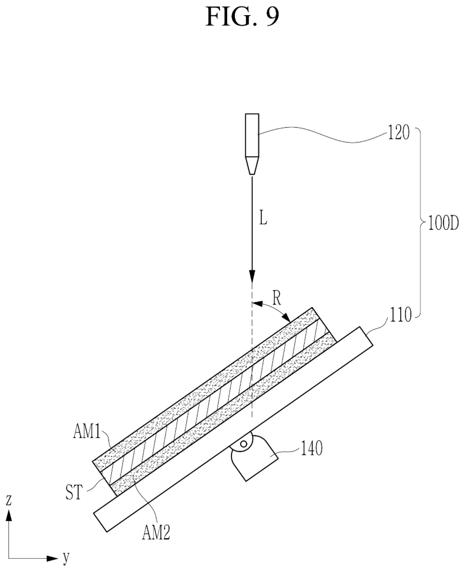

FIG. 9 is a side view of a laser notching apparatus 100D according to one embodiment of the present disclosure.

Referring to FIG. 9, the laser notching apparatus 100D according to one embodiment of the present disclosure may include a second driving member 140.

The second driving member 140 rotates the supporting member 110 so that the predetermined angle R is varied. One side of the supporting member 110 may be rotatably connected to the second driving member 140.

For example, the middle portion of the supporting member 110 may be rotatably connected to the second driving member 140. In some embodiments, although not shown in the drawings, one end of the supporting member 110 is rotatably connected to the second driving member 140.

The second driving member 140 may be, for example, a stepping motor, such as the first driving member 130. This second driving member 140 may rotate the supporting member 110 by a selected angle. However, the second driving member 140 is not necessarily limited to being a stepping motor.

The laser notching apparatus 100D according to the embodiment of FIG. 9 may reset the laser irradiating angle during the process operation, depending on the cutting quality of the electrode plate.

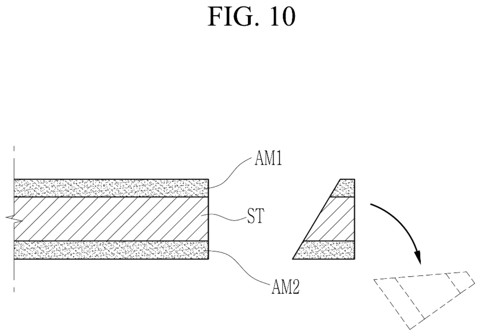

FIG. 10 is a cross-sectional view of an electrode plate cut by a laser notching apparatus according to an embodiment.

Referring to FIG. 10, as the laser is irradiated obliquely at an angle onto the electrode plate as described above, the substrate ST, the first active material layer AM1, and the second active material layer AM2 may be cut in parallel in the vertical direction on the electrode plate to fit or correspond to the target shape.

The laser notching apparatuses 100A, 100B, 100C, and 100D according to the present disclosure may reduce or prevent a short circuit from occurring in the electrode assembly by cutting (e.g., uniformly cutting) the incision surface of the electrode plate. Additionally, it may improve the manufacturing quality of the rechargeable battery.

The drawings referred to above and the disclosed detailed description of the present disclosure only illustrate the present disclosure, and are intended to describe the present disclosure, not to restrict the meanings or limit the scope of the present disclosure recited in the claims. Therefore, those skilled in the art would understand that various modifications and other equivalent exemplary embodiments may be made therefrom. Accordingly, the true technical protection scope of the present disclosure must be determined by the technical features of the accompanying claims. Description of symbols

| | | | |
|---|---|---|---|
| 1000: | rechargeable battery manufacturing system | | |
| 100A, 100B, 100C, 100D: | laser notching apparatus | | |
| 110: | supporting member | 120: | laser irradiating member |
| 130: | first driving member | 140: | second driving member |
| 210: | transporting device | 300: | coating device |
| 400: | drying device | 500: | rolling device |
| ST: | substrate | AM1: | first active material layer |
| AM2: | second active material layer | M: | slurry |

## Claims

1. A laser notching apparatus (100A-D) comprising:
a supporting member (110) for supporting an electrode plate (30A, 30B); and
a laser irradiating member (120) above the supporting member (110) and inclined to irradiate a laser obliquely to the electrode plate (30A, 30B) at a set angle (R) to cut the electrode plate (30A, 30B).

2. The laser notching apparatus (100A-D) of claim 1, wherein:
the supporting member (110) is positioned parallel to a ground, and
the laser irradiating member (120) is positioned at the set angle (R) with respect to the ground.

3. The laser notching apparatus (100A-D) of claim 2, further comprising:
a first driving member (130) coupled to the laser irradiating member (120) and configured to rotate the laser irradiating member (120) from the set angle (R) to a second angle different form the set angle (R).

4. The laser notching apparatus (100A-D) of claim 2 or 3, wherein:
the laser irradiating member (120) is configured to irradiate a laser so that it slopes downward from the outside to the inside of the electrode plate (30A, 30B).

5. The laser notching apparatus (100A-D) of any one of the preceding claims, wherein:
the supporting member (110) is positioned at an angle with respect to a ground, and
the laser irradiating member (120) is positioned in a vertical direction with respect to the ground.

6. The laser notching apparatus (100A-D) of claim 5, further comprising:
a second driving member (140) coupled to the supporting member (110) and configured to rotate the supporting member (110) to change the set angle (R) from a first angle to a second angle.

7. The laser notching apparatus (100A-D) of claim 5 or 6, wherein:
the laser irradiating member (120) is configured to irradiate the laser so that it slopes downward from the outside to the inside of the electrode plate (30A, 30B).

8. The laser notching apparatus (100A-D) of any one of the preceding claims, wherein:
the set angle (R) is in a range from approximately 35 degrees to approximately 55 degrees.

9. A rechargeable battery (10) manufacturing system comprising:
a transporting device (210) for transporting a substrate;
a coating device (300) for applying a slurry (M) to the substrate;
a drying device (400, 500) for drying the slurry (M) to generate dried slurry; and
a laser notching apparatus (100A-D) for cutting the substrate and the dried slurry with a laser,
wherein the laser notching apparatus (100A-D) is a laser notching apparatus (100A-D) according to any one of claim 1 to claim 8.
